# EUROPÄISCHE PATENTSCHRIFT

(11) **EP 1 689 152 B1**
(45) Veröffentlichungstag und Bekanntmachung des Hinweises auf die Patenterteilung: **19.12.2012**
(21) Anmeldenummer: 05002599.8
(22) Anmeldetag: 08.02.2005
(51) Int. Cl.: H04M 3/30, H04M 1/24, H04L 12/26, G06F 11/34

(54) **Lasttestgerät und Verfahren betreffend einen Lasttest eines Telekommunkationsnetzwerks**
Load testing device and method for a telecommunication network
Dispositif et procédé de test de charge pour un réseau de télécommunication

(43) Veröffentlichungstag der Anmeldung: 09.08.2006
(73) Patentinhaber: Tektronix International Sales GmbH, 8212 Neuhausen (CH)
(72) Erfinder: Wagner, Ute (geb. Greiner), 14641 Falkenrehde (DE); Wiedemann, Mike, 14612 Falkensee (DE); Schönfeld, Christian, 12205 Berlin (DE); Zander, Christian, 14612 Falkensee (DE); Blümcke, Michael, 13583 Berlin (DE); Laake, Heinz-Joachim, 16727 Oberkrämer (OT) Bärenklau (DE); Hain, Christian, 12203 Berlin (DE); Martens, Kristian, 13158 Berlin (DE); Kiehlmann, Karsten, 64295 Darmstadt (DE); Muncher, Elisabeth, Forest Grove, Oregon 97118 (US)
(74) Vertreter: Hofstetter, Schurack & Partner

(56) Entgegenhaltungen:
- EP-A1- 1 217 811
- WO-A-01/95561
- US-A1- 2004 062 359
- US-A1- 2004 088 605
- US-A1- 2004 107 415

## Beschreibung

Die vorliegende Erfindung betrifft ein Lasttestgerät mit einer Anzeigeeinheit zur Darstellung von Daten, die einen Lasttest eines Telekommunikationsnetzwerks betreffen, unter Verwendung mindestens einer graphischen Benutzeroberfläche, wobei ein Lasttest in mehrere Testphasen eingeteilt ist und auf der mindestens einen graphischen Benutzeroberfläche diesen Testphasen zugeordnete Funktionalitäten vorgesehen sind. Sie betrifft überdies ein Verfahren betreffend einen Lasttest eines Telekommunikationsnetzwerks mit einem Lasttestgerät, das eine Anzeigeeinheit mit mindestens einer graphischen Benutzeroberfläche zur Darstellung von Daten aufweist, die einen Lasttest eines Telekommunikationsnetzwerks betreffen, wobei ein Lasttest in mehrere Testphasen eingeteilt ist und auf der mindestens einen graphischen Benutzeroberfläche diesen Testphasen zugeordnete Funktionalitäten vorgesehen sind.

Aus dem Stand der Technik sind ein derartiges Lasttestgerät und ein derartiges Verfahren bekannt, wobei allen Benutzern der volle Funktionsumfang unabhängig vom Vorwissen des Benutzers zur Verfügung gestellt wird. Dies hat in der Vergangenheit häufig zu Fehlbedienungen geführt. Hält man sich vor Augen, dass manche Lasttests über Wochen ja sogar Monate laufen und das versehentliche Verstellen eines Testparameters nicht erkannt wird, so wird deutlich, welcher ungeheure Verlust an Zeit und welch hoher Aufwand an Kosten damit einhergehen können. Bisher wurde versucht, dem Problem dadurch zu begegnen, dass man den Benutzern ein aufwändiges Lern- und Trainingsprogramm hat angedeihen lassen. Dies schränkt einerseits den Kreis der potenziellen Benutzer eines derartigen Lasttestgeräts ein, erhöht die Vorlaufzeit aufgrund des nötigen Trainings im Falle von Änderungen und Ergänzungen auf der Benutzeroberfläche und bringt selbstverständlich einen hohen Kosten- und Zeitaufwand für die Lern- und Trainingsprogramme der Benutzer mit sich.

In diesem Zusammenhang sei auf die WO 01/95561 A2 verwiesen, die ein Verfahren und eine graphische Benutzeroberfläche zur Durchführung von Tests offenbart, die sowohl für auf digitalen Schaltungen als auch auf Paketen basierende Kommunikationsnetzwerke geeignet sind. Die graphische Benutzeroberfläche verwendet Touchscreen-Icons für die Bedienung, wobei nach einer ersten Auswahl durch einen Benutzer die für die zweite Auswahl gültigen Optionen hervorgehoben werden. Die Anzeige der graphischen Benutzeroberfläche weist drei Bereiche auf, von denen einer die physikalischen Kommunikationskanäle betrifft, einer die den Kanälen zugeordneten Standardmultiplexschritte und einer den auszuführenden Test.

Aus der US 2004/0088605 A1 sind ein Verfahren und ein System zum Testen von Netzwerksystemen bekannt. Es wird das Problem behandelt, die den verschiedenen Schritten des Testverfahrens zugeordneten Systemkomponenten aufzurüsten. Dazu werden Systeme offenbart, die sich aus einer Verarbeitungsvorrichtung und einer Testvorrichtung zusammensetzen, von denen jede einen eigenen Datenbus aufweist. Die beiden Datenbusse sind durch eine bi-direktionale Kommunikationsbrücke verbunden. Dadurch wird ermöglicht, die Verarbeitungsvorrichtung aufzurüsten, ohne die Testvorrichtung verändern zu müssen.

Schließlich sei auf die US 2004/0062359 A1 verwiesen, die eine Vorrichtung zur Integration ungleichartiger Systeme im Bereich des Wartens und Testens von Telefonschaltungen offenbart. Die Vorrichtung umfasst eine gemeinsame Steuerungsschnittstelle, eine Eingabevorrichtung zum Eingeben von von den ungleichartigen Systemen benötigten Daten in die gemeinsame Steuerungsschnittstelle und Mittel zum Übertragen der Daten von der gemeinsamen Steuerungsschnittstelle zu den ungleichartigen Systemen. Die Vorrichtung umfasst außerdem ein System zum Einloggen eines Benutzers, womit er sich über die gemeinsame Steuerungsschnittstelle einloggen kann und dann Zugang zu den ungleichartigen Systemen erhält.

In dem Dokument EP 1 217 811 A1 ist im Zusammenhang mit einem Test eines Telekommunikationsnetzwerks ein Verfahren zum Emulieren eines Terminals beschrieben, über welches automatisch Kommunikationsabläufe von innerhalb des Telekommunikationsnetzwerks durchgeführt werden können. Die Kommunikationsabläufe werden von einem Benutzer über eine Benutzerschnittstelle programmiert, wobei sich der Benutzer einer Vielzahl von Schlüsselwörtern bedienen kann, wobei sie jeweils für einen vorbereiteten Programmcode stehen, sodass durch Aneinanderreihen mehrerer Schlüsselwörter eine Kurzform für ein Programm zum Durchführen des Kommunikationsablaufs erstellt werden kann. Anschließend werden die den einzelnen Schlüsselwörtern zugeordneten Programmcodes zur einem ausführbaren Programm verbunden. Das so entstandene Programm kann dann im Rahmen von automatischen Kommunikationsabläufen zum Testen eines Kommunikationsnetzwerks verwendet werden.

In dem Dokument US 2004/107415 A1 sind ein Verfahren und ein Computersystem beschrieben, mittels welchem es über ein Web-Interface einem Benutzer ermöglicht ist, ein Programm auf einem Anwendungsserver zu testen, indem er sich von einem Computer aus über das Web-Interface an dem Anwendungsserver anmeldet und das zu testende Programm dorthin überträgt. Der Anwendungsserver ist für Benutzer von unterschiedlichen Firmen zugänglich, wobei in Abhängigkeit vom Namen des Benutzers und seiner Unternehmenszugehörigkeit nur bestimmte Funktionalitäten des Anwendungsservers freigeschaltet sind. Nach Beendigung der Login-Prozedur kann der Benutzer dann einen Lasttest vollständig planen, ausführen und auswerten.

Die Aufgabe der vorliegenden Erfindung besteht darin, das eingangs genannte Lasttestgerät bzw. das eingangs genannte Verfahren derart weiterzubilden, dass eine Reduzierung von Fehlbedienungen trotz eines hinsichtlich seines Umfangs reduzierten Lern- und Trainingsaufwands für die Benutzer ermöglicht wird.

Diese Aufgabe wird gelöst durch ein Lasttestgerät mit den Merkmalen von Patentanspruch 1 und ein Verfahren betreffend einen Lasttest mit den Merkmalen von Patentanspruch 8.

Die vorliegende Erfindung basiert auf der Erkenntnis, dass unterschiedliche Benutzer im Rahmen der Erstellung eines Lasttests mit unterschiedlichen Aufgaben befasst sind. Innerhalb dieser Aufgaben, mit denen sie sich gewöhnlich befassen, verfügen die Benutzer bereits nach einem geringen Lern- und Trainingsaufwand über gute Kenntnisse. Infolge ihrer Tätigkeit im Rahmen dieser Aufgaben sind sie darin auch geübt und Fehlbedienungen sind nahezu ausgeschlossen. Die Erfindung sieht nun vor, die Funktionalitäten der mindestens einen graphischen Benutzeroberfläche in Gruppen einzuteilen, die den Aufgabengebieten verschiedener Benutzer angepasst sind, wobei für bestimmte Benutzer nur bestimmte Funktionalitäten freigeschaltet sind. Im Rahmen eines Lasttests sind insbesondere folgende Gruppeneinteilungen für die Funktionalitäten der mindestens einen graphischen Benutzeroberfläche von Bedeutung: Lasttestentwicklung, Lasttestvorbereitung, Lasttestausführung, Lasttestanalyse. Ein Lasttestentwickler erhält die Testanforderungen und entwickelt einen Testplan. Dieser Plan beschreibt, wie das Testobjekt (DuT = Device under Test) getestet werden soll. Ein Lasttestvorbereiter kümmert sich um die Definition und Konfiguration aller Testparameter, d. h. er stellt eine virtuelle Repräsentation der Netzwerkumgebung zusammen, definiert hierbei Schnittstellen, richtet Protokollstacks ein, weist Lastprofile zu, bestimmt die Art und Menge der Subscriber und kann Besonderheiten im Test vorsehen, beispielsweise die Verknüpfung unterschiedlicher Netzstandards. Im Vergleich zu den beiden genannten Benutzern, wird an einen Lasttestausführer ein sehr viel geringerer Kenntnisstand gefordert. Ein Lasttestausführer führt den Test entsprechend dem Testplan aus und überwacht den Test, um sicherzustellen, dass der Test wie vorgesehen abläuft. Tritt während der Lasttestausführung ein Problem auf, stoppt der Lasttestausführer den Test und informiert den Lasttestentwickler entsprechend. Die Ausführung von Lasttest wird häufig vor Ort, beispielsweise an einem realen Knoten von einem Mitarbeiter eines Netzwerkbetreibers ausgeführt.

Ein Lasttestanalysierer analysiert das Testergebnis und stellt fest, ob und warum Probleme aufgetreten sind. Da ein Fehlerreport nicht nur die Nennung des Problems einschließt, sondern auch den Kontext, in dem das Problem entstanden ist, kann der Lasttestanalysierer den Fehler beschreiben und diese Information an den Lasttestentwickler zur Behebung weiterleiten.

Durch die vorliegende Erfindung werden den Benutzern nur die Funktionalitäten bereitgestellt, bei denen sie über Kenntnisse verfügen und die sie im Hinblick auf ihre Aufgagen benötigen. Dadurch kann der Lern- und Trainingsaufwand niedrig gehalten werden, wobei gleichzeitig die Gefahr von Fehlbedienungen weitgehend reduziert ist.

Durch diese Maßnahme können weiterhin die Bedienungsanleitungen entsprechend den Gruppen von Funktionalitäten abgefasst sein. Aufgrund der vorgenommenen Spezialisierung ist die für den jeweiligen Benutzer relevante Bedienungsanleitung kompakt und mit den für ihn relevanten Informationen abgefasst. Dies resultiert in einer erhöhten Übersichtlichkeit und einer schnellen Einarbeitung.

Wie bereits erwähnt, sind die Gruppenfunktionalitäten unterschiedlichen Testphasen zugeordnet sind. Da für verschiedene Testphasen verschiedene Benutzer zuständig sind, ergibt sich dadurch eine Benutzbarkeit eines erfindungsgemäßen Lasttestgeräts, die sich durch eine hohe Ergonomie und Ökonomie auszeichnet.

Eine besonders bevorzugte Ausführungsform ist dadurch gekennzeichnet, dass auf der graphischen Benutzeroberfläche Aktivierungsmittel vorgesehen sind, die ausgelegt sind, eine bestimmte Gruppe von Funktionalitäten zu aktivieren, wenn für einen Benutzer mehrere Funktionalitäten freigeschaltet sind. Dies trägt dem Umstand Rechnung, dass je nach Größe des Teams, das an einem Lasttest arbeitet, gegebenenfalls einer Person, entsprechend einer Kennung, mehrere Gruppen von Funktionalitäten zugeordnet sein können, da diese Person beispielsweise gleichzeitig als Lasttestentwickler und Lasttestvorbereiter tätig ist. Die genannte Maßnahme bewirkt eine Reduktion der Gefahr von Fehlbedienungen und eine Erhöhung der Übersichtlichkeit auch für derartige Benutzer. Insbesondere ermöglicht sie die universelle Einsetzbarkeit eines erfindungsgemäßen Lasttests bei Firmen mit einem großen und daher spezialisierten Mitarbeiterstamm und bei solchen, die nur über einen kleinen Mitarbeiterstamm verfügen.

Neben den genannten Gruppen von Funktionalitäten können weiterhin Gruppen von Funktionalitäten vorgesehen sein, die keine Testphasen betreffen, insbesondere eine Gruppe betreffend Administratorfunktionalitäten, die die Freischaltung der Gruppen von Testphasenfunktionalitäten für die Benutzerkennungen ermöglicht, sowie eine Gruppe von Kundentestfunktionalitäten, die die Ausführung von Lasttestfunktionen außerhalb der Gruppe von Testphasenfunktionalitäten ermöglicht.

Eine besonders bevorzugte Ausführungsform zeichnet sich dadurch aus, dass für jede Gruppe von Funktionalitäten mindestens eine eigene graphische Benutzeroberfläche vorgesehen ist. Durch diese Maßnahme erhöht sich die Übersichtlichkeit und vereinfacht sich die Bedienbarkeit auch für gut ausgebildete Benutzer.

Je nach Komplexität des Lasttests kann jedoch auch vorgesehen sein, dass für mindestens zwei Gruppen von Funktionalitäten ein und dieselbe graphische Benutzeroberfläche vorgesehen ist.

Bei bestimmten Ausführungsformen zeichnen sich die Testphasen dadurch aus, dass sie zeitlich seriell aufeinander folgen.

Weitere vorteilhafte Ausführungsformen ergeben sich aus den Unteransprüchen.

Im Nachfolgenden werden Ausführungsbeispiele der Erfindung unter Bezugnahme auf die beigefügten Zeichnungen näher beschrieben. Es zeigen:
- Figur 1: in schematischer Darstellung ein Ausführungsbeispiel eines erfindungsgemäßen Lasttestgeräts;
- Figur 2: in schematischer, abstrakter Darstellung ein Ausführungsbeispiel einer graphischen Benutzeroberfläche eines erfindungsgemäßen Lasttestgeräts;
- Figur 3a, b: jeweils ein Ausführungsbeispiel einer graphischen Benutzeroberfläche eines erfindungsgemäßen Lasttestgeräts für die Testphase "Lasttestentwicklung";
- Figur 4: ein Ausführungsbeispiel einer graphischen Benutzeroberfläche eines erfindungsgemäßen Lasttestgeräts für die Testphase "Lasttestvorbereitung"; und
- Figur 5a, b: jeweils ein Ausführungsbeispiel einer graphischen Benutzeroberfläche eines erfindungsgemäßen Lasttestgeräts für die Testphase "Lasttestausführung".

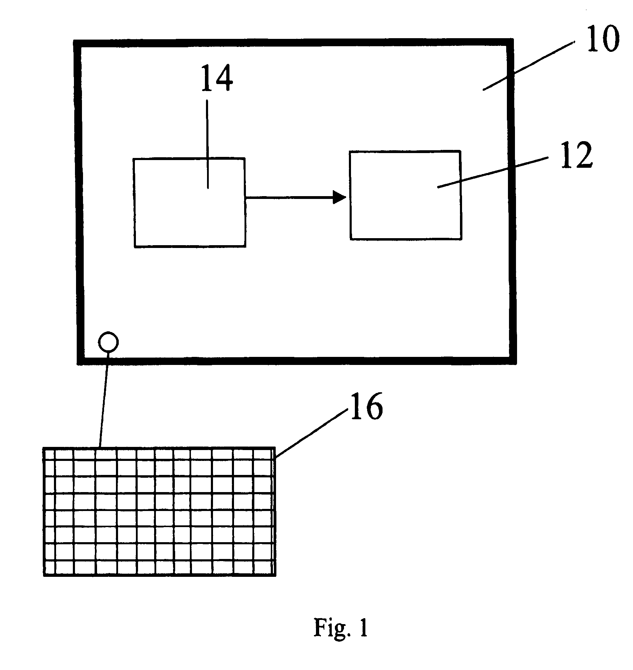

Figur 1 zeigt in schematischer Darstellung ein erfindungsgemäßes Lasttestgerät 10 mit einer Anzeigeeinheit 12 zur Darstellung von Daten, die einen Lasttest eines Telekommunikationsnetzwerks betreffen. Dabei wird auf der Anzeigeeinheit 12 mindestens eine graphische Benutzeroberfläche dargestellt. Ein Lasttest ist in mehrere Testphasen unterteilt und auf der mindestens einen graphischen Benutzeroberfläche sind diesen Testphasen zugeordnete Funktionalitäten vorgesehen. Das erfindungsgemäße Lasttestgerät 10 umfasst weiterhin eine Speichervorrichtung 14, in der von einem Administrator Kennungen von Benutzern und die Freischaltungen bestimmter Funktionalitäten eintragbar sind. Dabei werden die Funktionalitäten in Gruppen zusammengefasst und für jede Kennung wird eine oder werden mehrere Gruppen von Funktionalitäten freigeschaltet. Die Freischaltung bestimmter Gruppen von Funktionalitäten kann durch entsprechende Eingabe über eine Tastatur, beispielsweise in eine Tabelle, für bestimmte Kennungen, entsprechend bestimmten Benutzern, vorgenommen werden.

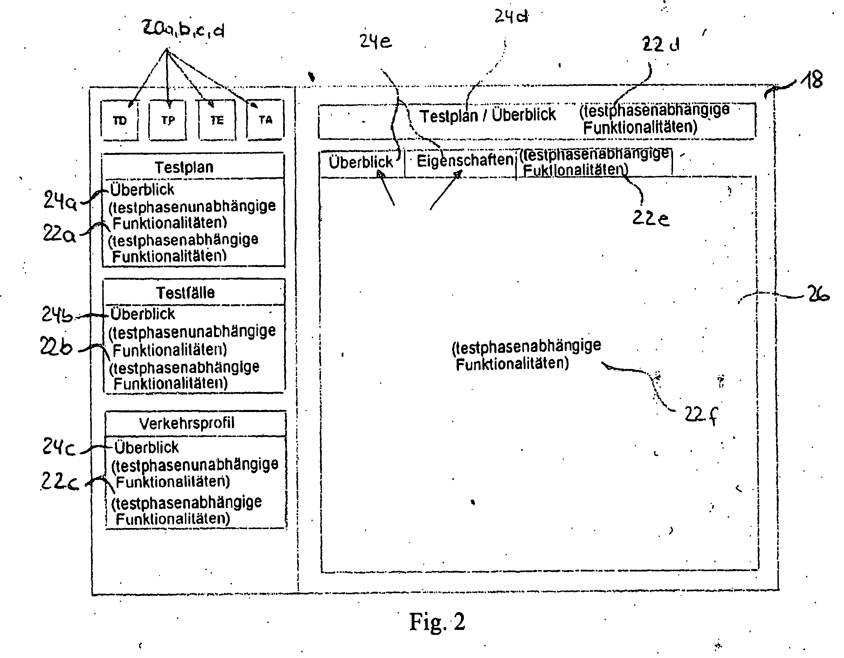

Figur 2 zeigt beispielhaft eine graphische Benutzeroberfläche wie sie auf der Anzeigeeinheit 12 eines erfindungsgemäßen Lasttestgeräts 10 angezeigt wird. Die Benutzeroberfläche 18 zeigt vier übergeordnete Funktionalitäten 20a bis d, die jeweils für eine Gruppe von Funktionalitäten stehen: So steht die Funktionalität 20a (TD) für Lasttestentwicklung (Test Development), die Funktionalität 20b (TP) für Lasttestvorbereitung (Test Preparation), die Funktionalität 20c (TE) für Lasttestausführung (Test Execution) und die Funktionalität 20d (TA) für Lasttestanalyse (Test Analysis). Wenn sich nunmehr ein Benutzer bei dem Lasttestgerät im Laufe einer Login-Prozedur mit seiner Kennung anmeldet, werden je nach dem, welche Gruppen von Funktionalitäten der Administrator für ihn freigeschaltet hat, eine oder mehrere der Funktionalitäten 20a bis d freigegeben, d.h. sie können aktiviert werden bzw. der Benutzer kann sie beispielsweise unter Verwendung eines Zeigegeräts anklicken. Zur besseren Erkennbarkeit sind nicht freigegebene Funktionalitäten 20a bis d auf dem Bildschirm bevorzugt in einer ersten Farbe dargestellt, freigegebene Funktionalitäten 20a bis d in einer zweiten Farbe und die tatsächlich aktivierte Funktionalität 20a bis d in einer dritten Farbe. Wenn demnach für einen Benutzer nur eine Gruppe von Funktionalitäten freigegeben ist, hat dieser Benutzer keine Auswahlmöglichkeit. Sind für einen Benutzer mehrere Gruppen von Funktionalitäten freigegeben, so kann der Benutzer mittels eines Zeigegeräts, beispielsweise einer Computermaus, die von ihm gewünschte Gruppe von Funktionalitäten aktivieren.

Nach der Aktivierung einer Funktionalität 20a bis d werden die Darstellungen in einem oder mehreren Fenstern der graphischen Benutzeroberfläche entsprechend modifiziert. Vorliegend werden in den relevanten Fenstern Funktionalitäten angezeigt, die der ausgewählten Gruppe von Funktionalitäten angehören. In der Darstellung von Figur 2 sind dieser ausgewählten Gruppe von Funktionalitäten angehörende Funktionalitäten allgemein mit der Bezugszahl 22 gekennzeichnet. Der angehängte Buchstabe gibt an, in welchem Fenster diese Funktionalität angezeigt wird. Die Benutzeroberfläche kann nur noch Funktionalitäten umfassen, die der ausgewählten Gruppe von Funktionalitäten angehören. Es können jedoch, wie in dem Ausführungsbeispiel von Figur 2 gezeigt, in bestimmten oder allen Fenstern auch noch Funktionalitäten angezeigt werden, die keiner Gruppe von Funktionalitäten zugeordnet sind, vielmehr allen Gruppen von Funktionalitäten übergeordnet sind. In dem Beispiel von Figur 2 sind diese allgemein mit dem Bezugszeichen 24 gekennzeichnet, wobei zur Kennzeichnung des jeweiligen Fensters wiederum ein Buchstabe angehängt ist. Das eigentliche Arbeitsfenster 26 umfasst vorliegend nur noch Funktionaütäten, die der ausgewählten oder zugewiesenen Gruppe von Funktionalitäten angehören.

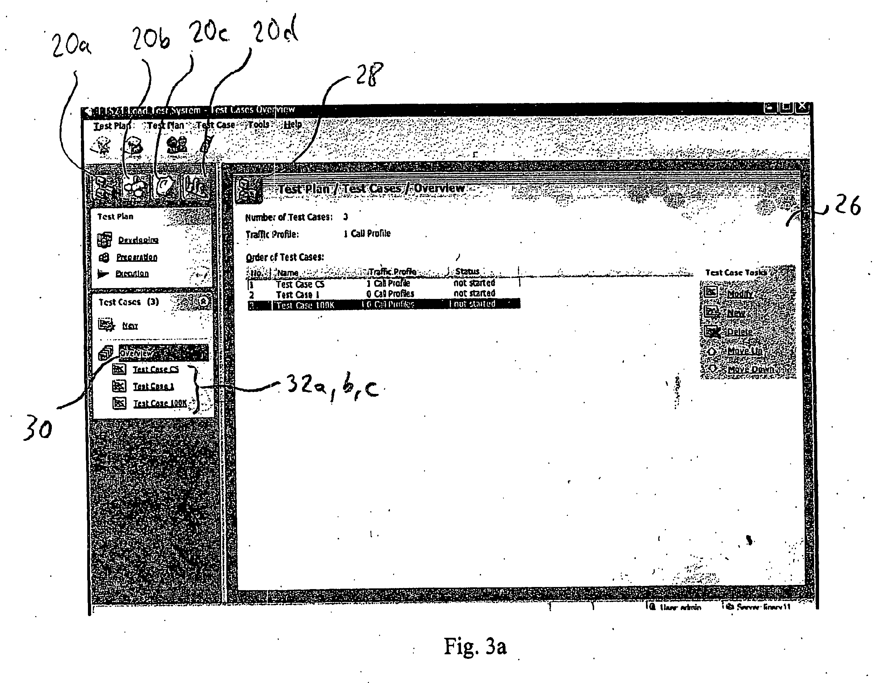

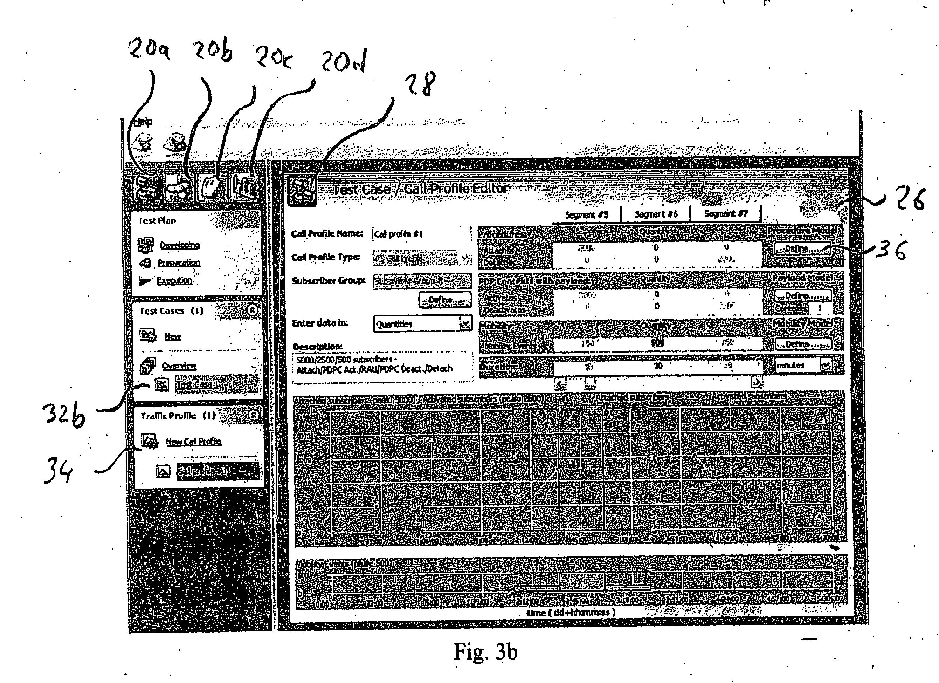

Die Figuren 3a, 3b, 4, 5a und 5b zeigen unterschiedliche graphische Benutzeroberflächen, die in dem erfindungsgemäßen Lasttestgerät realisiert worden sind. So zeigt Figur 3a eine graphische Benutzeroberfläche, der zunächst die Funktionalitäten 20a bis d zu entnehmen sind. Vorliegend ist für den Benutzer, erkennbar an der Farbe, nur die Funktionalität 20a freigeschaltet. Im Arbeitsfenster 26 sind nur Funktionalitäten vorgesehen, die der Gruppe von Funktionalitäten zugeordnet ist, die durch die Funktionalität 20a repräsentiert wird. Zur leichteren Orientierung ist im Arbeitsfenster 26 die Funktionalität 20a, siehe Bezugszeichen 28, nochmals dargestellt. Vorliegend ist im Arbeitsfenster 26 ein Überblick über verschiedene Testfälle dargestellt. Die Überblicksdarstellung wurde durch Aktivierung der Funktionalität "Overview" 30 bewirkt. Mittels der Funktionalitäten 32a, b, c können nunmehr bestimmte Test Cases definiert werden. Figur 3b zeigt eine weitere Benutzeroberfläche, die wiederum Funktionalitäten anbietet, die der Gruppe von Funktionalitäten angehören, die durch die Funktionalität 20a repräsentiert sind. Vorliegend wurde die Funktionalität 32b aktiviert, d. h. die Erstellung des Test Cases (1) ausgewählt. Entsprechend dieser Aktivierung werden im Fenster 34 weitere Funktionalitäten angezeigt, die sich aus der Aktivierung der Funktionalität 32b ergeben, und natürlich wiederum der Gruppe von Funktionalitäten angehören, die durch die Funktionalität 20a aktiviert wurden. Gemäß den Funktionalitäten im Fenster 34 wurde vorliegend die Erstellung eines "New Call Profiles", d.h. eines neuen Anruferprofils, ausgewählt, insbesondere die Erstellung des Call Profiles mit der Nummer (1). Die im Arbeitsfenster 26 angezeigten Funktionalitäten betreffen nunmehr Funktionalitäten, die zur Erstellung des Call Profiles (1) benötigt werden. Durch im Arbeitsfenster 26 vorgesehenen Funktionalitäten, z. B. die Funktionalität 36, kann die Anzeige einer untergeordneten graphischen Benutzeroberfläche initiiert werden, um weitere Definitionen einzugeben.

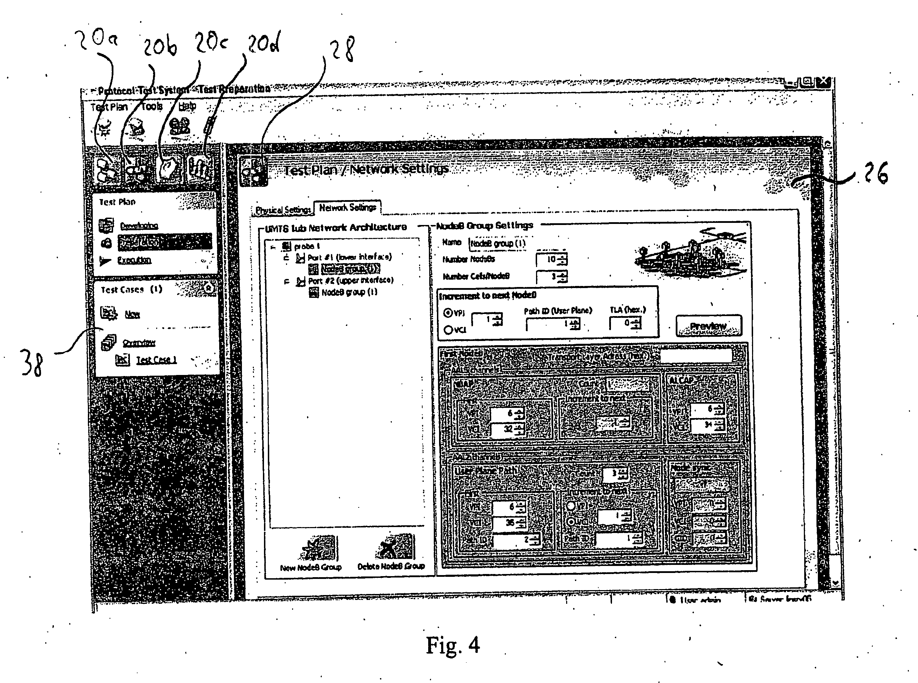

Figur 4 zeigt die auf dem Anzeigegerät eines erfindungsgemäßen Lasttestgeräts angezeigte graphische Benutzeroberfläche, wenn für einen Benutzer die Gruppe von Funktionalitäten freigeschaltet wurde, die durch die Funktionalität 20b repräsentiert sind. Im Arbeitsfenster 26 sind vorliegend Funktionalitäten angezeigt, die der Lasttestvorbereitung dienen. In dem Fenster 38 wurde definiert, dass es sich um die Lasttestvorbereitung zum Test Case (1) handelt.

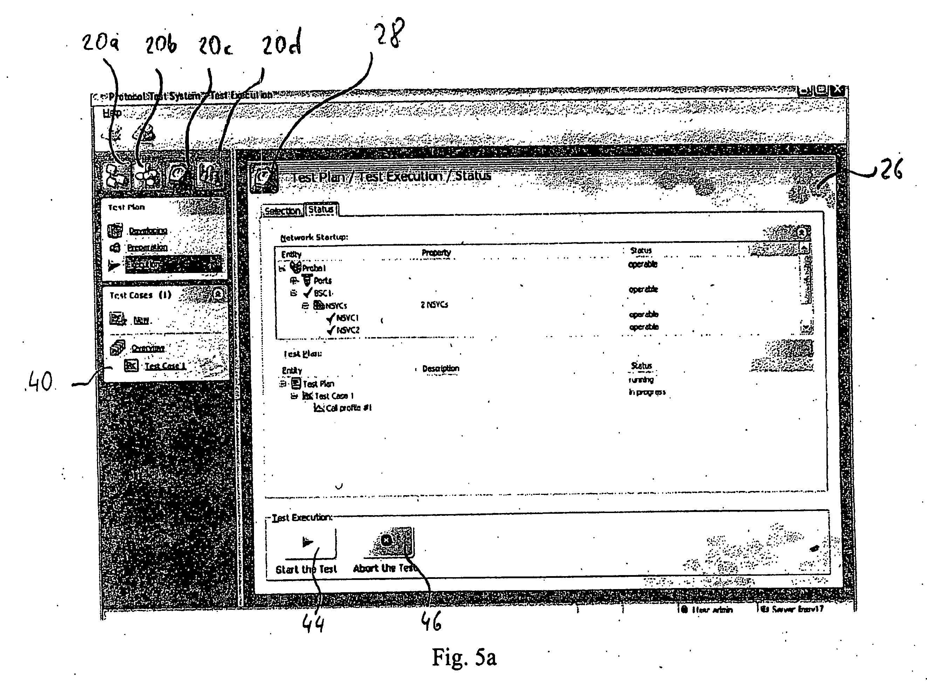

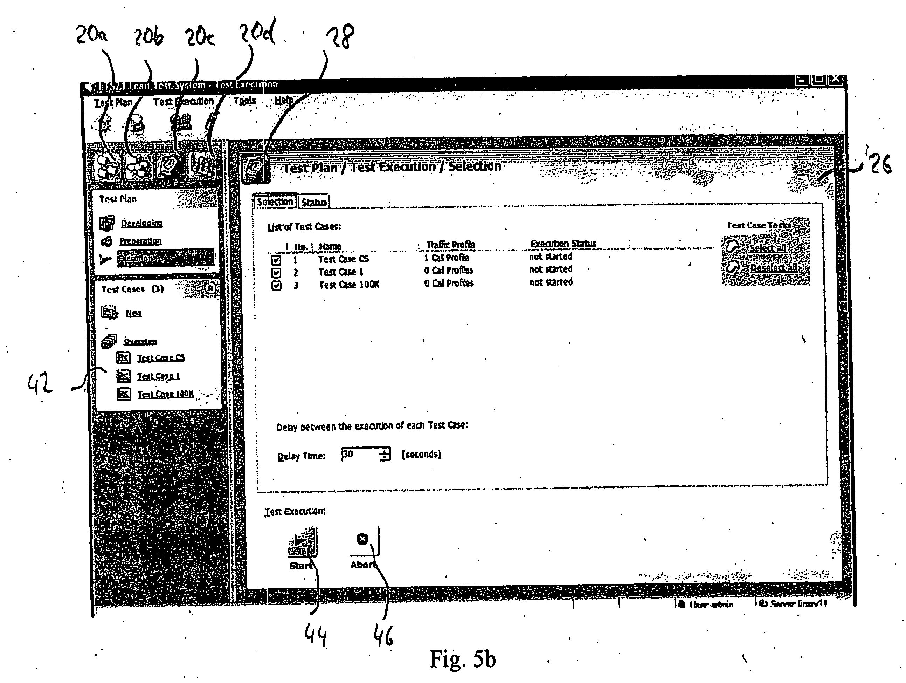

Die graphischen Benutzeroberflächen, die in den Figuren 5a und 5b dargestellt sind, betreffen die Lasttestausführung, d. h. es ist jeweils die Funktionalität 20c aktiviert, die zugehörige Gruppe von Funktionalitäten sind freigeschaltet. Während in Figur 5a im Fenster 40 Test Case (1) aktiviert wurde, wurde im Fenster 42 von Figur 5b die serielle Ausführung dreier Test Cases aktiviert. Im Arbeitsfenster 26 sind jeweils Funktionalitäten angegeben, die der aktivierten Funktionalität 20c und insbesondere der Auswahl im Fenster 40 bzw. 42 entsprechen. Ein Start des Lasttests kann über die jeweilige Funktionalität 44, ein Abbruch des Lasttests über die jeweilige Funktionalität 46 bewirkt werden.

Das am Beispiel der Figuren 2 bis 5 dargestellte Prinzip gilt selbstverständlich auch für die durch die Funktionalität 20d aktivierbare oder aktivierte Gruppe von Funktionalitäten, die der Lasttestanalyse zugeordnet sind.

Nicht dargestellt sind die bereits erwähnten graphischen Benutzeroberflächen, die keine Lasttestphasen betreffen, sondern einerseits Administratorfunktionalitäten, die die Freischaltung der Gruppen von Testphasenfunktionalitäten für die Benutzerkennungen ermöglicht, sowie Kundentestfunktionalitäten, die Ausführung von Lasttestfunktionen außerhalb der Gruppe von Testphasenfunktionalitäten ermöglicht.

Anstelle der in der Anmeldung erwähnten unterschiedlichen Farben können unterschiedliche Helligkeitsstufen einer Farbe oder bei monochromer Darstellung unterschiedliche Graustufen verwendet werden.

## Patentansprüche

1. Lasttestgerät mit einer Anzeigeeinheit (12) zur Darstellung von Daten, die einen Lasttest eines Telekommunikationsnetzwerks betreffen, unter Verwendung mindestens einer graphischen Benutzeroberfläche (18), wobei ein Lasttest in mehrere Testphasen eingeteilt ist und auf der mindestens einen graphischen Benutzeroberfläche (18) diesen Testphasen zugeordnete Funktionalitäten vorgesehen sind,
**dadurch gekennzeichnet,**
**dass** es weiterhin eine Speichervorrichtung (14) umfasst, in der Kennungen von Benutzern eintragbar sind, und die Funktionalitäten in Gruppen zusammengefasst sind, wobei die Gruppen von Funktionalitäten unterschiedlichen Testphasen zugeordnet sind und die Gruppen von Funktionalitäten durch einen Administrator freischaltbar sind und hierbei für jede Kennung jeweils eine oder mehrere bestimmte Gruppen von Funktionalitäten freigebbar sind.

2. Lasttestgerät nach Anspruch 1,
**dadurch gekennzeichnet,**
**dass** auf der graphischen Benutzeroberfläche (18) Aktivierungsmittel (20a, 20b, 20c, 20d) vorgesehen sind, die ausgelegt sind, eine bestimmte Gruppe von Funktionalitäten zu aktivieren, wenn für einen Benutzer mehrere Funktionalitäten freigeschaltet sind.

3. Lasttestgerät nach einem der Ansprüche 1 oder 2,
**dadurch gekennzeichnet,**
**dass** die Gruppen von Funktionalitäten einer oder mehreren aus der folgenden Zusammenstellung zugeordnet sind: Lasttestentwicklung; Lasttestvorbereitung; Lasttestausführung; Lasttestanalyse.

4. Lasttestgerät nach einem der vorhergehenden Ansprüche,
**dadurch gekennzeichnet,**
**dass** weiterhin Gruppen von Funktionalitäten vorgesehen sind, die keine Testphasen betreffen, insbesondere:
- eine Gruppe betreffend Administratorfunktionalitäten, die die Freischaltung der Gruppen von Testphasen-Funktionalitäten für die Benutzerkennungen ermöglicht;
- eine Gruppe von Kundentestfunktionalitäten, die die Ausführung von Lasttestfunktionen außerhalb der Gruppe von Testphasen-Funktionalitäten ermöglicht.

5. Lasttestgerät nach einem der vorhergehenden Ansprüche,
**dadurch gekennzeichnet,**
**dass** für jede Gruppe von Funktionalitäten mindestens eine eigene graphische Benutzeroberfläche vorgesehen ist.

6. Lasttestgerät nach einem der vorhergehenden Ansprüche,
**dadurch gekennzeichnet,**
**dass** für mindestens zwei Gruppen von Funktionalitäten ein und dieselbe graphische Benutzeroberfläche vorgesehen ist.

7. Lasttestgerät nach einem der vorhergehenden Ansprüche,
**dadurch gekennzeichnet,**
**dass** die Testphasen zeitlich seriell aufeinanderfolgende Testphasen sind.

8. Verfahren betreffend einen Lasttest eines Telekommunikationsnetzwerks mit einem Lasttestgerät (10), das eine Anzeigeeinheit (12) mit mindestens einer graphischen Benutzeroberfläche (18) zur Darstellung von Daten aufweist, die einen Lasttest eines Telekommunikationsnetzwerks betreffen, wobei ein Lasttest in mehrere Testphasen eingeteilt ist und auf der mindestens einen graphischen Benutzeroberfläche (18) diesen Testphasen zugeordnete Funktionalitäten vorgesehen sind,
**gekennzeichnet durch** folgende Schritte:
a) Einteilung der Funktionalitäten in Gruppen, wobei die Gruppen von Funktionalitäten unterschiedlichen Testphasen zugeordnet sind und für jede Kennung eine oder mehrere Gruppen von Funktionalitäten freischaltbar sind;
b) Empfangen einer Kennung eines bestimmten Benutzers in Laufe einer Login-Prozedur;
c) für den bestimmten Benutzer: Freischaltung nur einer oder mehrerer bestimmter Gruppen von Funktionalitäten.

## Claims

1. Load testing appliance having a display unit (12) for the presentation of data, which relate to a load test of a telecommunication network, involving the use of at least one graphical user interface (18), wherein a load test is divided into several test phases and wherein on the at least one graphical user interface (18) there are envisaged functionalities assigned to said test phases,
**characterised in that**
it furthermore comprises a storage device (14), in which there are enterable IDs of users, and **in that** the functionalities are pooled in groups, the groups of functionalities being assigned to different test phases, wherein said groups of functionalities may be enabled by an administrator and wherein for each ID there may be enabled one or several specific groups of functionalities, respectively.

2. Load testing appliance according to claim 1,
**characterised in that**
on the graphical user interface (18) there are envisaged activation means (20a, 20b, 20c, 20d) designed to activate a certain group of functionalities, if several functionalities are enabled for a user.

3. Load testing appliance according to one of claims 1 or 2,
**characterised in that**
the groups of functionalities are assigned to one or several from the following compilation: load test development; load test preparation; load test execution; load test analysis.

4. Load testing appliance according to one of the above claims,
**characterised in that**
there are also envisaged groups of functionalities, which do not relate to test phases, particularly:
- a group relating to administrator functionalities, which allows the enabling of the groups of test phase functionalities for the user IDs;
- a group of customer test functionalities, which allows the execution of load test functions outside the group of test phase functionalities.

5. Load testing appliance according to one of the above claims,
**characterised in that**
for each group of functionalities there is envisaged at least one own graphical user interface.

6. Load testing appliance according to one of the above claims,
**characterised in that**
for at least two groups of functionalities there is envisaged one and the same graphical user interface.

7. Load testing appliance according to one of the above claims,
**characterised in that**
the test phases are test phases that, timewise, succeed one another serially.

8. Method relating to a load test of a telecommunication network with a load testing appliance (10), which exhibits a display unit (12) with at least one graphical user interface (18) for the presentation of data relating to a load test of a telecommunication network, wherein a load test is divided into several test phases and wherein on the at least one graphical user interface (18) there are envisaged functionalities assigned to said test phases,
**characterized by** the following steps:
a) dividing of the functionalities into groups, the groups of functionalities being assigned to different test phases;
b) receiving an ID of a certain user when the user logs on to the load testing device;
c) for said user: enabling of one or more groups of functionalities.

## Revendications

1. Appareil d'essai de charge avec une unité d'affichage (12), destinée à représenter des données, qui concernent un essai de charge d'un réseau de télécommunications, en utilisant au moins une interface utilisateur graphique (18), moyennant quoi un essai de charge est partagé en plusieurs phases d'essais et des fonctionnalités, affectées à ces phases d'essais, sont prévues sur la au moins une interface utilisateur graphique (18),
**caractérisé en ce**
**qu'**il comprend, en outre, un appareil de mémorisation (14), dans lequel des codes d'utilisateurs peuvent être enregistrés et les fonctionnalités sont rassemblées en groupes, moyennant quoi les groupes de fonctionnalités sont affectés à des phases différentes d'essais et les groupes de fonctionnalités peuvent être déconnectés par un administrateur et, respectivement, un ou plusieurs groupes définis de fonctionnalités peuvent être validés, à ce sujet, pour chaque code.

2. Appareil d'essai de charge selon la revendication 1,
**caractérisé en ce**
**que** des moyens d'activation (20a, 20b, 20c, 20d) dont prévus sur l'interface utilisateur graphique (18), qui sont conçus pour activer un groupe défini de fonctionnalités, lorsque plusieurs fonctionnalités sont déconnectées pour un utilisateur.

3. Appareil d'essai de charge selon l'une des revendications 1 ou 2, **caractérisé en ce**
**que** les groupes de fonctionnalités sont affectés à un ou plusieurs éléments parmi la liste suivante : mise au point d'essai de charge, préparation d'essai de charge, exécution d'essai de charge, analyse des essais de charge.

4. Appareil d'essai de charge selon l'une des revendications précédentes, **caractérisé en ce**
**qu'**en outre, des groupes de fonctionnalités sont prévus, qui ne concernent pas des phases d'essai, en particulier :
- un groupe, concernant des fonctionnalités d'administrateur, qui permet la déconnexion des groupes de fonctionnalités de phases d'essais pour les codes d'utilisateurs ;
- un groupe de fonctionnalités d'essais de clients, qui permet l'exécution de fonctions d'essai de charge en dehors du groupe de fonctionnalités de phases d'essais.

5. Appareil d'essai de charge selon l'une des revendications précédentes, **caractérisé en ce**
**qu'**au moins une interface utilisateur graphique spécifique est prévue pour chaque groupe de fonctionnalités.

6. Appareil d'essai de charge selon l'une des revendications précédentes, **caractérisé en ce**
**qu'**une seule et même interface utilisateur graphique est prévue pour au moins deux groupes de fonctionnalités.

7. Appareil d'essai de charge selon l'une des revendications précédentes, **caractérisé en ce**
**que** les phases d'essais sont des phases d'essais successives, chronologiquement en série.

8. Procédé concernant un essai de charge d'un réseau de télécommunications, avec un appareil d'essai de charge (10), qui présente une unité d'affichage (12) avec au moins une interface utilisateur graphique (18), destinée à représenter des données, qui concernent un essai de charge d'un réseau de télécommunications, moyennant quoi un essai de charge est partagé en plusieurs phases d'essai et des fonctionnalités, affectées à ces phases d'essai, sont prévues sur la au moins une interface utilisateur graphique (18),
**caractérisé par** les étapes suivantes, consistant à :
a) partager les fonctionnalités en groupes, moyennant quoi les groupes de fonctionnalités sont affectés à des phases différentes d'essai et un ou plusieurs groupes de fonctionnalités peuvent être déconnectés pour chaque code ;
b) recevoir le code d'un utilisateur défini au cours d'une procédure d'ouverture de session ;
c) déconnecter, pour l'utilisateur défini, un seul ou plusieurs groupes définis de fonctionnalités.
